# EUROPEAN PATENT SPECIFICATION

(11) **EP 2 922 131 B1**
(45) Date of publication and mention of the grant of the patent: **22.06.2016**
(21) Application number: 15159189.8
(22) Date of filing: 16.03.2015
(51) Int. Cl.: H01M 8/06, H01M 8/04

(54) **Fuel cell system**
Brennstoffzellensystem
Système de pile à combustible

(30) Priority: 20.03.2014 JP 2014057654
(43) Date of publication of application: 23.09.2015
(73) Proprietor: AISIN SEIKI KABUSHIKI KAISHA, Kariya-shi, Aichi 448-8650 (JP)
(72) Inventor: Goto, Shunsuke, Kariya-shi, Aichi 448-8650 (JP)
(74) Representative: TBK

(56) References cited:
- EP-A1- 2 416 428
- EP-A2- 2 639 873
- US-A1- 2010 062 294

## Description

### TECHNICAL FIELD

This disclosure generally relates to a fuel cell system.

### BACKGROUND DISCUSSION

A known fuel cell system is disclosed, for example, in JP2013-235697A which will be hereinafter referred to as Reference 1. The fuel cell system disclosed in Reference 1 includes a control unit that determines whether or not a failure occurs at a first combusting portion, a second combusting portion, a carbon monoxide concentration sensor, and/or a surrounding state of the fuel cell system based on a first output value, a second output value and a third output value from the carbon monoxide concentration sensor. The first output value is obtained by the carbon monoxide concentration sensor in a state where an ignition heater or a combustion catalytic heater is supplied with an electric power. The second output value is obtained by the carbon monoxide concentration sensor before the ignition heater or the combustion catalytic heater is supplied with the electric power. The third output value is obtained by the carbon monoxide concentration sensor after the stop of power supply to the ignition heater or the combustion catalytic heater. Consequently, in a case where each of the output values of the carbon monoxide concentration sensor is greater than a predetermined value, a possible failure may be identified or determined so as to take an appropriate action in the aforementioned fuel cell system.

Furthermore, document EP 2 639 873 A2 discloses a fuel cell system, wherein a temperature obtaining means controls supply of the source material at a constant supply flow rate, thereby obtaining a temperature of the combustion portion, which is detected by the temperature sensor during the period in which the temperature of the combustion portion is stable. Further, a temperature deviation obtaining means obtains a temperature deviation of the combustion portion. Furthermore, a supply flow rate deviation of the source material from the temperature deviation is obtained. In addition, a supply flow rate of the source material, which is detected by the flow sensor, is adjusted on the basis of the obtained supply flow rate deviation.

Moreover, documents US 2010/062294 A1 and EP 2 416 428 A1 disclose technological background in the field of the present invention.

According to the fuel cell system disclosed in Reference 1, a failure of the fuel cell system is identifiable, specifically, a combustion failure is determinable by the carbon monoxide concentration sensor. On the other hand, a cost decrease of the fuel cell system as a whole is desired or requested. That is, an elimination of the carbon monoxide concentration sensor which is relatively expensive is desirable.

A need thus exists for a fuel cell system which may ensure combustibility of a combusting portion even in a case where a carbon monoxide concentration sensor is eliminated.

### SUMMARY

The above object is achieved by a fuel cell system according to claim 1. Further features and advantageous modifications are shown in the dependent claims.

According to an aspect of this disclosure, a fuel cell system includes a fuel cell performing a power generation by a fuel and an oxidant gas, a reforming portion generating the fuel from a source material and water to supply the fuel to the fuel cell, a combusting portion receiving a combustible gas that includes an unused fuel in the fuel not used for the power generation from the fuel cell and combusting the combustible gas by an oxidant gas to send out a combustion gas, a source material supply device supplying the source material, an oxidant gas supply device supplying the oxidant gas to the combusting portion, a source material flow sensor detecting a supply flow rate of the source material, an oxidant gas flow sensor detecting a supply flow rate of the oxidant gas, and a control unit controlling at least the oxidant gas supply device and the source material supply device, the control unit including a flame extinction determination portion determining whether or not a flame extinction occurs at the combusting portion, an acquisition portion acquiring an oxidant gas flow rate serving as a supply flow rate of the oxidant gas per unit time and a source material flow rate serving as a supply flow rate of the source material per unit time at a time when the flame extinction determination portion determines that the flame extinction occurs at the combusting portion, a correction portion correcting at least one of the oxidant gas flow rate and the source material flow rate acquired by the acquisition portion based on at least one of tolerances of the source material flow sensor and the oxidant gas flow sensor, and a reignition portion controlling the oxidant gas supply device and the source material supply device to supply the oxidant gas and the source material at a corrected oxidant gas flow rate and a corrected source material flow rate corrected by the correction portion to the combusting portion for reigniting the combusting portion.

Accordingly, the correction portion corrects at least one of the oxidant gas flow rate and the source material flow rate acquired by the acquisition portion (i.e., acquired when the flame extinction of the combusting portion is determined) based on at least one of the tolerances of the oxidant gas flow sensor and the source material flow sensor. Further, the reignition portion controls the oxidant gas supply device and the source material supply device so as to supply the oxidant gas and the source material at the corrected oxidant gas flow rate and the corrected source material flow rate by the correction portion for reigniting the combusting portion. As a result, in a case where the combusting portion is reignited because the flame extinction occurs at the combusting portion once after the combusting portion is brought to a combustion state or because the combusting portion is not ignited, the oxidant gas flow rate and the source material flow rate may be changed on a basis of the tolerances of the oxidant gas flow sensor and the source material flow sensor in view of the oxidant gas flow rate and the source material flow rate at the time of the flame extinction or ignition so that the combusting portion is shifted from a flame extinction range to a combustion range. Thus, in the fuel cell system of the disclosure, even in a case where a carbon monoxide concentration sensor is omitted, a combustion performance of the combusting portion may be ensured.

The control unit determines that the flame extinction occurs at the combusting portion in a case where a temperature of the combusting portion is lower than a predetermined temperature.

Thus, in a case where the combusting portion is ignited, the temperature of the combusting portion becomes equal to or greater than the predetermined temperature. On the other hand, in a case where the temperature of the combusting portion is lower than the predetermined temperature, the combusting portion is inhibited from being ignited to thereby detect the flame extinction of the combusting portion.

The correction portion includes a first correction portion correcting the oxidant gas flow rate acquired by the acquisition portion by subtracting a flow rate corresponding to a half of the tolerance of the oxidant gas flow sensor.

Initially, only the oxidant gas flow rate decreases while the source material flow rate is fixed for reigniting the combusting portion. Thus, an air fuel ratio is changed in a way that the amount of fuel (source material) is relatively large, which may securely ignite the combusting portion.

The correction portion includes a second correction portion correcting the source material flow rate acquired by the acquisition portion by adding a flow rate corresponding to a predetermined ratio relative to a half of the tolerance of the source material flow sensor.

Accordingly, in a case where the air fuel ratio is in such a state that the amount of fuel (source material) is relatively small even after the oxidant gas flow rate decreases, only the source material flow rate increases while the oxidant gas flow rate is fixed so as to perform the reignition of the combusting portion. Thus, the air fuel ratio is changed in a way that the amount of fuel (source material) is relatively large, which may securely ignite the combusting portion.

The correction portion includes a third correction portion correcting the oxidant gas flow rate acquired by the acquisition portion by further subtracting a flow rate corresponding to a half of the tolerance of the oxidant gas flow sensor.

Accordingly, while the source material flow rate is fixed, only the oxidant gas flow rate further decreases so as to perform the reignition of the combusting portion. Thus, the air fuel ratio is changed in a way that the amount of fuel (source material) is relatively large, which may securely ignite the combusting portion.

The fuel cell system further includes a fuel cell module that houses the fuel cell, the reforming portion and the combusting portion. The correction portion corrects the oxidant gas flow rate and the source material flow rate acquired by the acquisition portion based on the tolerances of the oxidant gas flow sensor and the source material flow sensor and the reignition portion controls the oxidant gas supply device and the source material supply device to supply the oxidant gas and the source material at a corrected oxidant gas flow rate and a corrected source material flow rate corrected by the correction portion to the combusting portion for reigniting the combusting portion in a case where the fuel cell module is in a state where the flame extinction is likely to occur at the combusting portion.

Accordingly, even in a state where the flame extinction of the combusting portion is likely to occur, the combusting portion may be securely reignited.

The control unit determines that the fuel cell module is in the state where the flame extinction is likely to occur at the combusting portion in a case where a temperature of the fuel cell is lower than a predetermined temperature.

Accordingly, by the detection of the temperature of the fuel cell, it is securely detectable that the flame extinction of the combusting portion is likely to occur.

The control unit determines that the fuel cell module is in the state where the flame extinction is likely to occur at the combusting portion in a case where a temperature of the reforming portion is lower than a predetermined temperature.

Accordingly, by the detection of the temperature of the reforming portion, it is securely detectable that the flame extinction of the combusting portion is likely to occur.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to an embodiment disclosed here;
Fig. 2 is a block diagram of the fuel cell system illustrated in Fig. 1;
Fig. 3 is a flowchart of a control program performed by a control unit illustrated in Fig. 2;
Figs. 4A and 4B are flowcharts of a control program (reignition subroutine) performed by the control unit illustrated in Fig. 2;
Fig. 5 is a graph illustrating a relation among a source material supply amount, a cathode air supply amount, a flame extinction range and an emission failure range according to the embodiment;
Fig. 6 is a graph illustrating a relation among the source material supply amount, the cathode air supply amount, the flame extinction range, the emission failure range and a tolerance range and explaining an operation by a first correction portion according to the embodiment;
Fig. 7 is a graph illustrating a relation among the source material supply amount, the cathode air supply amount, the flame extinction range, the emission failure range and the tolerance range and explaining operations by the first correction portion and a second correction portion according to the embodiment;
Figs. 8A and 8B are flowcharts of a control program (a first control modified example) performed by the control unit illustrated in Fig. 2; and
Figs. 9A and 9B are flowcharts of a control program (a second control modified example) performed by the control unit illustrated in Fig. 2.

### DETAILED DESCRIPTION

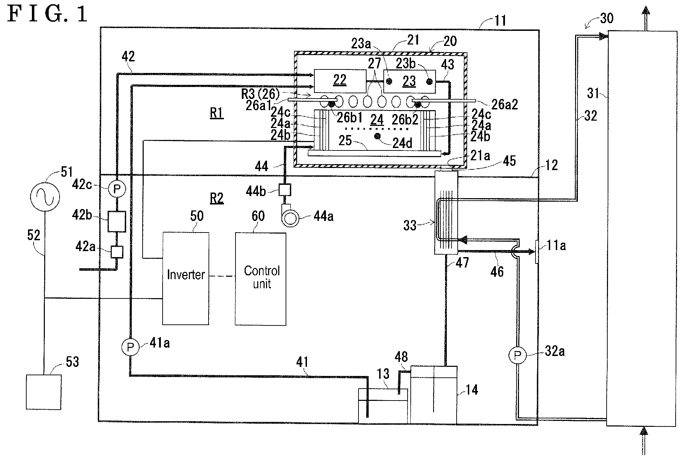

An embodiment will be explained with reference to the attached drawings. As illustrated in Fig. 1, a fuel cell system of the embodiment includes a case 11 substantially in a box form, a fuel cell module 20, an exhaust heat recovery system 30, an inverter device 50, and a control unit 60.

The case 11 includes a partition member 12 dividing an inside of the case 11 into a first chamber R1 serving as a first void and a second chamber R2 serving as a second void. The partition member 12 is formed by a plate-formed member dividing or separating the inside of the case 11 in a vertical direction (in an up-and-down direction). The first chamber R1 is formed at an upper side while the second chamber R2 is formed at a lower side relative to the partition member 12 within the case 11.

The fuel cell module 20 is accommodated within the first chamber R1 while having a distance (or a void) from an inner wall surface of the first chamber R1. The fuel cell module 20 at least includes a casing 21 and a fuel cell 24. According to the present embodiment, the fuel cell module 20 includes the casing 21, an evaporating portion 22, a reforming portion 23, and the fuel cell 24.

The casing 21 in a box form is made of an insulative material. The casing 21 is supported by a support structure within the first chamber R1 while having the distance from the inner wall surface of the first chamber R1. The evaporating portion 22, the reforming portion 23, the fuel cell 24, and a combustion void R3 serving as a combusting portion 26 are arranged within the casing 21 in a state where the evaporating portion 22 and the reforming portion 23 are positioned at an upper side of the fuel cell 24.

The evaporating portion 22, which is heated by combustion gas, evaporates water (i.e., water for reforming) supplied to the evaporating portion 22 so as to generate water vapor and preheats a source material (fuel) supplied to the evaporating portion 22. The evaporating portion 22 mixes the water vapor generated in the aforementioned manner and the source material that is preheated so as to supply the mixture to the reforming portion 23. The source material corresponds to gaseous fuel such as natural gas and LPG, for example, and liquid fuel such as kerosene, gasoline, and methanol, for example. According to the present embodiment, the natural gas is used as the source material.

A first end of a water supply pipe 41 is connected to the evaporating portion 22. A second end (a lower end) of the water supply pipe 41 is connected to a water tank 13 so that the second end is positioned within the water tank 13. A water pump 41 a is provided at the water supply pipe 41. The water pump 41 a supplies water to the evaporating portion 22 and controls or adjusts a volume of water (i.e., a flow rate of water per unit time) supplied to the evaporating portion 22.

The source material is supplied to the evaporating portion 22 via a source material supply pipe 42 from a supply source for source material (which will be hereinafter simply referred to as a supply source). A pair of fuel valves, a flow sensor 42a, a desulfurizer 42b and a fuel pump 42c are disposed in the mentioned order at the source material supply pipe 42 from an upstream side in view of a flow direction of the source material. The fuel valves are electromagnetic on-off valves for opening and closing the source material supply pipe 42. The flow sensor 42a detects a flow rate (supply flow rate) of fuel (source material) supplied to the fuel cell 24, i.e., detects a flow rate of fuel per unit time. The flow sensor 42a corresponds to a fuel (source material) flow sensor and transmits a detection result to the control unit 60. The desulfurizer 42b removes sulfur content, for example, sulfur compound, in the source material. The flow sensor 42a may be disposed between the desulfurizer 42b and the fuel pump 42c. The fuel pump 42c is a fuel (source material) supply device that supplies fuel (source material) to the fuel cell 24. In response to a control command value from the control unit 60, the fuel pump 42c adjusts or controls a supply amount of fuel (i.e., a flow rate of fuel per unit time) from the supply source. The source material corresponds to a source fuel.

The reforming portion 23 is heated by the combustion gas so as to receive heat necessary for a water vapor reforming reaction. As a result, the reforming portion 23 generates reformed gas from mixed gas (source material and water vapor) supplied from the evaporating portion 22. Specifically, the inside of the reforming portion 23 is filled with a catalyst, for example, a ruthenium catalyst (Ru catalyst) and a nickel catalyst (Ni catalyst). The mixed gas supplied from the evaporating portion 22 reacts by means of the catalyst so as to be reformed, thereby generating hydrogen gas and carbon monoxide gas (water vapor reforming reaction). At the same time, carbon monoxide generated during the water vapor reforming reaction and water vapor react so as to be converted to hydrogen gas and carbon dioxide, i.e., a carbon monoxide shift reaction occurs. The thus generated gas (reformed gas) is supplied to a fuel electrode of the fuel cell 24. The reformed gas includes hydrogen, carbon monoxide, carbon dioxide, water vapor, natural gas (methane gas) that is not reformed, and water (water vapor) not used for reforming. The water vapor reforming reaction is an endothermic reaction while the carbon monoxide shift reaction is an exothermic reaction.

The reforming portion 23 includes a first temperature sensor 23a that detects a temperature (i.e., a reforming portion inlet temperature T1) of a portion where the source material and the water for reforming (water vapor) flow into. The first temperature sensor 23a is provided at a portion of the reforming portion 23 where the source material and the water for reforming (water vapor) flow into. The first temperature sensor 23a may be disposed at a portion before the catalyst or a just start point of the catalyst. The first temperature sensor 23a transmits a detection result to the control unit 60.

The reforming portion 23 further includes a second temperature sensor 23b that detects a temperature (i.e., a reforming portion outlet temperature T2) of a portion where the reformed gas flows out. The second temperature sensor 23b is provided at a portion of the reforming portion 23 where the reformed gas flows out. The second temperature sensor 23b transmits a detection result to the control unit 60.

The fuel cell 24 includes a lamination of plural cells 24a each including a fuel electrode, an air electrode (an oxidant electrode), and an electrolyte disposed between the fuel electrode and the air electrode. The fuel cell 24 according to the present embodiment is a solid oxide fuel cell (SOFC) where zirconium oxide serving as a solid oxide is used as the electrolyte. The fuel electrode of the fuel cell 24 is supplied with hydrogen, carbon monoxide, and methane gas, for example, as fuel. An operating temperature of the fuel cell 24 is substantially in a range from 400 °C to 1,000 °C. Even at the temperature equal to or lower than 400°C, the fuel cell 24 is still able to generate an electric power equal to or smaller than rating power. The fuel cell 24 is allowed to start power generation at 600 °C. Not only hydrogen is used as the fuel but also natural gas or coal gas may be directly used as the fuel. When the natural gas or the coal gas is directly used as the fuel, the reforming portion 23 may be omitted.

A fuel flow passage 24b through which the reformed gas serving as the fuel flows is formed at each of the cells 24a so as to face the fuel electrode thereof. An air flow passage 24c through which air (cathode air) serving as oxidant gas flows is formed at each of the cells 24a so as to face the air electrode thereof.

The fuel cell 24 includes a fuel cell temperature sensor 24d that detects a temperature (i.e., a fuel cell temperature T3) of the fuel cell 24. The fuel cell temperature sensor 24d is provided at a substantially center portion in the lamination direction of the cells 24a corresponding to the up-and-down direction. The fuel cell temperature sensor 24d transmits a detection result to the control unit 60.

The fuel cell 24 is placed on a manifold 25. The reformed gas is supplied from the reforming portion 23 to the manifold 25 via a reformed gas supply pipe 43. A lower end (a first end) of the fuel flow passage 24b is connected to a fuel lead-out port formed at the manifold 25. The reformed gas led out from the fuel lead-out port of the manifold 25 is introduced from the lower end of the fuel flow passage 24b and is discharged from an upper end of the fuel flow passage 24b. The cathode air sent from a cathode air blower 44a flows through a cathode air supply pipe 44 so as to be supplied from a lower end of the air flow passage 24c and be discharged from an upper end of the air flow passage 24c.

The cathode air blower 44a is arranged within the second chamber R2. The cathode air blower 44a suctions air within the second chamber R2 and discharges the air to the air electrode of the fuel cell 24. A discharge volume of air by the cathode air blower 44a is regulated and controlled (for example, controlled on a basis of a load electric power (power consumption) of the fuel cell 24). The cathode air blower 44a is an oxidant gas supply device for supplying the cathode air to the combusting portion 26. A flow sensor 44b is provided at the cathode air supply pipe 44. The flow sensor 44b detects a flow rate (supply flow rate) of cathode air supplied to the fuel cell 24 and to the combusting portion 26, i.e., detects a flow rate of cathode air per unit time. The flow sensor 44b corresponds to an oxidant gas flow sensor and transmits a detection result to the control unit 60.

In the fuel cell 24, the fuel supplied to the fuel electrode and the oxidant gas supplied to the air electrode achieve the power generation. Reactions indicated by a chemical formula (1) and a chemical formula (2) as below occur at the fuel electrode while a reaction indicated by a chemical formula (3) as below occurs at the air electrode. That is, oxide ion (O²⁻) generated at the air electrode penetrates through the electrolyte so as to react with hydrogen at the fuel electrode, thereby generating an electric energy. As a result, the reformed gas and the oxidant gas (air) which have not been used in the power generation are discharged from the fuel flow passage 24b and the air flow passage 24c respectively.

(1) H₂ + O²⁻ → H₂ + 2e⁻

(2) CO + O²⁻ → CO₂ + 2e⁻

(3) 1/2O₂ + 2e⁻ → O²⁻

The reformed gas (anode-off gas) that has not been used in the power generation is discharged from the fuel flow passage 24b and is burnt at the combustion void R3 formed between the fuel cell 24 and the evaporating portion 22 (the reforming portion 23) by means of the oxidant gas (cathode-off gas) that has not been used in the power generation. The resulting combustion gas (flames) heats the evaporating portion 22 and the reforming portion 23, and further brings the inside of the fuel cell module 20 to be heated at an operating temperature. Afterwards, the combustion gas is discharged to the outside of the fuel cell module 20 from an exhaust opening 21 a. Accordingly, the aforementioned combustion void R3 constitutes the combusting portion 26 heating the reforming portion 23 by burning the anode-off gas and the cathode-off gas from the fuel cell 24. The combusting portion 26 receives combustible gas including unused fuel not used for the power generation from the fuel cell 24 to burn or combust the combustible gas by the oxidant gas and sends out exhaust combustion gas.

The anode-off gas is burnt to generate flames 27 at the combusting portion 26 (the combustion void R3). First and second ignition heaters 26a1 and 26a2 are provided at the combusting portion 26 so as to ignite the anode-off gas. First and second combustion temperature sensors 26b1 and 26b2 are also provided at the combusting portion 26 for detecting a temperature of the combusting portion 26. Detection results (output signals) of the first and second combustion temperature sensors 26b1 and 26b2 are transmitted to the control unit 60.

The exhaust heat recovery system 30 performs a heat exchange between exhaust heat of the fuel cell 24 and storage water so that the exhaust heat is recovered and stored in the storage water. The exhaust heat recovery system 30 includes a water storage tank 31 storing water (hot or warmed water) serving as the storage water, a water circulation line 32 where the water (storage water) is circulated, and a heat exchanger 33 where the heat exchange is performed between the exhaust combustion gas from the fuel cell module 20 and the water (storage water).

The water storage tank 31 includes a single columnar container in which the water (hot or warmed water) is stored in such a manner that a temperature is the highest at an upper portion of the water in the container, is gradually decreasing towards a lower portion of the water, and is the lowest at the lower portion of the water in the container. Water such as tapped water, for example, (i.e., water at a relatively low temperature) is supplied to the lower portion of the columnar container of the water storage tank 31. The water at a high temperature, i.e., hot or warmed water, stored at the water storage tank 31 is led out from the upper portion of the columnar container of the water storage tank 31.

A first end of the water circulation line 32 is connected to the lower portion of the water storage tank 31 while a second end of the water circulation line 32 is connected to the upper portion of the water storage tank 31. A water circulation pump 32a serving as a storage water circulation means and the heat exchanger 33 are provided in the mentioned order at the water circulation line 32 from the first end to the second end thereof. The water circulation pump 32a suctions the water (storage water) at the lower portion of the water storage tank 31 so that the water flows in an arrow direction in Fig. 1 through the water circulation line 32 to be supplied and discharged to the upper portion of the water storage tank 31. A flow rate (a sending amount) of the water flowing through the water circulation line 32 is controlled by the water circulation pump 32a.

The heat exchanger 33 is supplied with the exhaust combustion gas emitted from the fuel cell module 20 and with the storage water from the water storage tank 31 so as to perform the heat exchange between the exhaust combustion gas and the storage water. The heat exchanger 33 is arranged within the case 11. According to the present embodiment, the heat exchanger 33 is provided at a lower side of the fuel cell module 20. At least a lower portion of the heat exchanger 33 penetrates through the partition member 12 and projects to the second chamber R2.

According to the heat exchanger 33 including the aforementioned configuration, the exhaust combustion gas from the fuel cell module 20 is condensed because of the heat exchange with the storage water and is cooled. The exhaust combustion gas after condensation flows through an exhaust pipe 46 to be discharged to the outside of the case 11 via an exhaust port 11 a. Condensed water resulting from the aforementioned heat exchange flows through a condensed water supply pipe 47 so as to be supplied to a deionizer 14 (i.e., the condensed water drops by its own weight).

The fuel cell system of the present embodiment also includes the water tank 13 and the deionizer 14. The water tank 13 and the deionizer 14 are arranged within the second chamber R2. The water tank 13 stores pure water (deionized water) supplied from the deionizer 14. The water tank 13 is a water reservoir for storing the pure water supplied from the deionizer 14. A water sensor (water level sensor) is provided at the water tank 13 for detecting pure water volume within the water tank 13. The water sensor is formed by a float-type or capacitance water level meter, for example. The water sensor transmits a detection result (detection signal) to the control unit 60.

The deionizer 14 incorporates activated carbon and ion-exchange resin. For example, the deionizer 14 is filled with flaky activated carbon and granular ion-exchange resin. In addition, depending on a state of treatment-object water, a hollow fiber filter may be provided at the deionizer 14. The deionizer 14 brings the condensed water sent from the heat exchanger 33 to be formed into the pure water (deionized water) by means of the activated carbon and the ion-exchange resin. The deionizer 14 is in communication with the water tank 13 via a pipe 48. The pure water in the deionizer 14 is supplied to the water tank 13 by flowing through the pipe 48.

The fuel cell system also includes the inverter device 50. The inverter device 50 includes a first function for receiving a direct-current (DC) voltage output from the fuel cell 24 and converting the DC voltage into a predetermined alternating-current (AC) voltage so as to output the AC voltage to a power line 52 connected to an alternating system power supply 51 (hereinafter simply referred to as a system power supply 51) and an external electric power load 53 (hereinafter simply referred to as an electric power load 53). The inverter device 50 also includes a second function for receiving an AC voltage from the system power supply 51 via the power line 52 and converting the AC voltage into a predetermined DC voltage so as to output the DC voltage to an auxiliary machinery and/or the control unit 60.

The system power supply (or a commercial power supply) 51 supplies the electric power to the electric power load 53 via the power line 52 connected to the system power supply 51. The fuel cell 24 is connected to the power line 52 via the inverter device 50. The electric power load 53 is a load driven by an AC power source, i.e., an electrical appliance such as a hair drier, a refrigerator, and a television, for example.

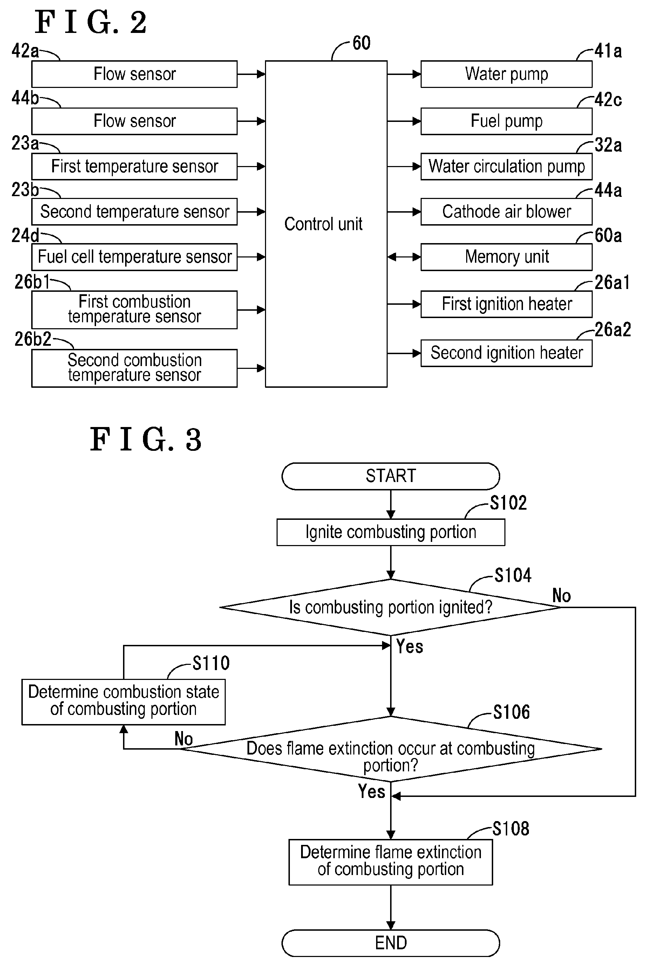

The fuel cell system further includes the control unit 60. As illustrated in Fig. 2, the temperature sensors 23a, 23b, 24d, 26b1, 26b2, the flow sensors 42a, 44b, the pumps 32a, 41 a, 42c, the blower 44a, the ignition heaters 26a1, 26a2, and a memory unit 60a are connected to the control unit 60. The control unit 60 includes a microcomputer having an input-output interface (I/O interface), a CPU, a RAM, and a ROM all of which are connected to one another via a bus. The CPU has a function to operate the fuel cell system. The RAM temporarily stores a variable necessary to perform program (control program) for the operation of the fuel cell system. The ROM stores such program.

Next, an operation of the fuel cell system will be explained. In a case where a start switch is turned on (or in a case where an automatic start is conducted because a start time which is specified beforehand by a user is reached), program corresponding to a flowchart illustrated in Fig. 3 is started.

In step S102 (hereinafter "step" will be omitted), the control unit 60 controls the combusting portion 26 to be ignited. Specifically, the control unit 60 starts sending or supplying the source material and the cathode air. The control unit 60 drives the fuel pump 42c to pump or send out the source material at a predetermined supply flow rate (i.e., a target source material supply amount). The control unit 60 also drives the cathode blower 44a to pump or send out the cathode air at a predetermined supply flow rate (i.e., a target cathode air supply amount). At the same time as the pumping or sending of the source material and the cathode air, the control unit 60 starts supplying the electric power to the ignition heaters 26a1 and 26a2.

Accordingly, the source material discharged from the fuel pump 42c is supplied to the combusting portion 26 by flowing through the evaporating portion 22, the reforming portion 23, and the fuel flow passage 24b of the fuel cell 24. The cathode air sent out from the cathode air blower 44a is supplied to the combusting portion 26a by flowing through the air flow passage 24c of the fuel cell 24. The source material and the cathode air supplied to the combusting portion 26 start burning (i.e., the source material and the cathode air are ignited) by the ignition heaters 26a1 and 26a2 which are supplied with the electric power.

In S104, the control unit 60 determines whether or not the combusting portion 26 is ignited (i.e., performs an ignition determination). When the combusting portion 26 is ignited, the combustion void R3 is heated by the combustion of the combusting portion 26. Thus, in a case where the temperature detected by the combustion temperature sensor 26b1 (or 26b2) is equal to or greater than a predetermined temperature, the control unit 60 determines that the combusting portion 26 is ignited. On the other hand, in a case where the detected temperature by the combustion temperature sensor 26b1 (or 26b2) is lower than the predetermined temperature, the control unit 60 determines that the combusting portion 26 is not ignited, i.e., determines that flame extinction occurs at the combusting portion 26 (S108).

After the control unit 60 determines that the combusting portion 26 is ignited (i.e., in a combustion state of the combusting portion 26), the program proceeds to S106 in which the control unit 60 determines whether or not the flame extinction occurs at the combusting portion 26 (i.e., flames in the combusting portion 26 are blown out). Specifically, in the same way as S104, the control unit 60 determines "Yes" in S106 in a case where the temperature detected by the combustion temperature sensor 26b1 (or 26b2) is lower than the predetermined temperature and determines the flame extinction of the combusting portion 26 (i.e., performs a flame extinction determination) in S108 that serves as a flame extinction determination portion. Afterwards, the control unit 60 terminates the process of the flowchart.

On the other hand, the control unit 60 determines "No" in S106 in a case where the detected temperature by the combustion temperature sensor 26b1 (or 26b2) is equal to or greater than the predetermined temperature so as to determine that the combusting portion 26 is in the combustion state in S110. The control unit 60 thereafter repeats the operation in S106 in a case where the combusting portion 26 is in the combustion state.

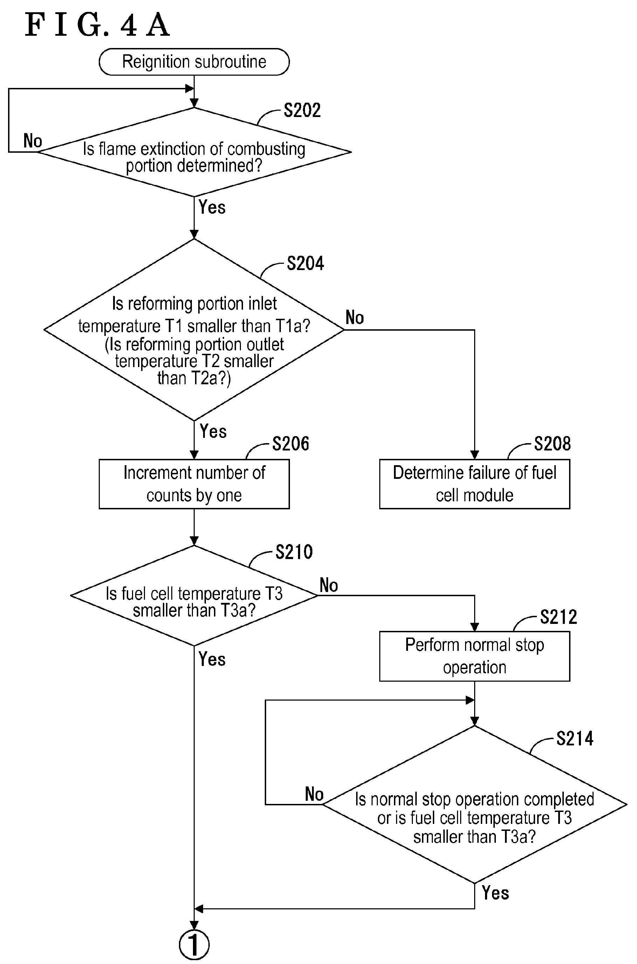

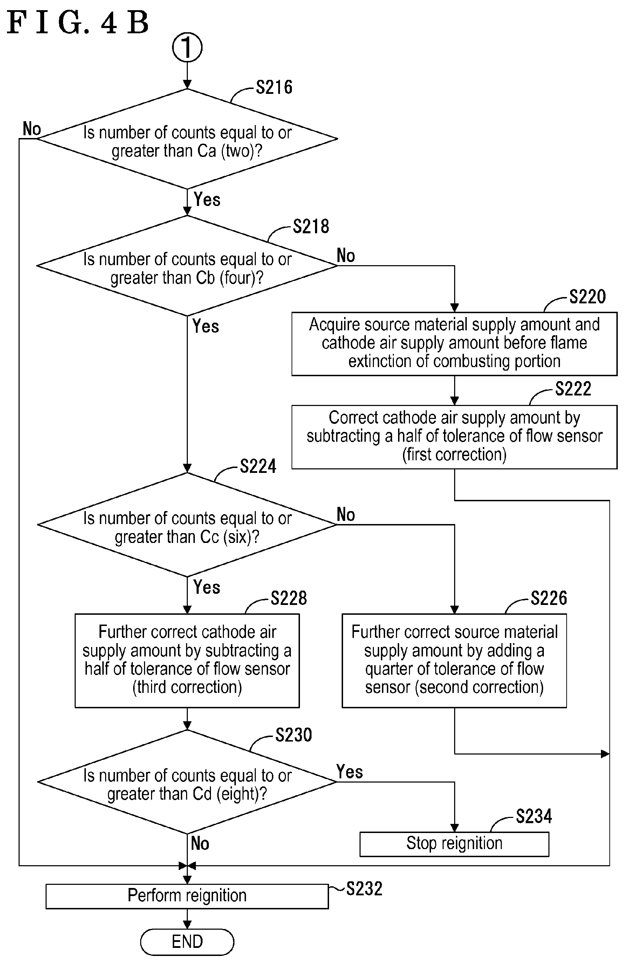

Next, a reignition control for reigniting the combusting portion 26 in a case where the combusting portion 26 is not ignited or is ignited but thereafter the flame extinction occurs will be explained. In a case where the start switch is turned on (or in a case where the automatic start is conducted because the start time which is specified beforehand by a user is reached), program corresponding to flowcharts illustrated in Figs. 4A and 4B is started.

In S202, the control unit 60 determines whether or not the flame extinction occurs at the combusting portion 26. In a case where it is determined that the flame extinction occurs at the combusting portion 26, the control unit 60 determines "Yes" in S202 so that the program proceeds to S204. In this case, a state where the flame extinction occurs at the combusting portion 26 includes a state where the combusting portion 26 is not ignited. On the other hand, in a case where it is not determined that the flame extinction occurs at the combusting portion 26, the control unit 60 determines "No" in S202 and repeats the operation in S202.

In S204, the control unit 60 determines whether or not a temperature of the reforming portion 23 is lower than a predetermined temperature (for example, 500°C). That is, the control unit 60 determines whether or not a reforming reaction of the reforming portion 23 is smaller than a predetermined reaction rate. For example, the control unit 60 determines whether or not the reforming portion inlet temperature T1 is lower than a predetermined temperature T1a. Alternatively, the control unit 60 determines whether or not the reforming portion outlet temperature T2 is lower than a predetermined temperature T2a.

When the temperature of the reforming portion 23 is equal to or greater than the predetermined temperature, the control unit 60 determines "No" in S204 and the program proceeds to S208. In S208, the control unit 60 determines a failure of the fuel cell module 20. The failure of the fuel cell module 20 includes a breakage of each of the temperature sensors 23a, 23b, and 24d provided within the fuel cell module 20, a breakage of the casing 21 (for example, a crack of the casing 21), and the like. The failure of the fuel cell module 20 may include a breakage of the flow sensor 42a or 44b.

In a case where the temperature of the reforming portion 23 is lower than the predetermined temperature, the control unit 60 determines "Yes" in S204 and the program proceeds to S206. The control unit 60 increments the number of counts by one. Afterwards, the control unit 60 determines whether or not a temperature of the cell 24a of the fuel cell 24 is smaller than a predetermined temperature (for example, 300°C) in S210. The aforementioned predetermined temperature corresponds to an oxidation temperature of the cell 24a. For example, the control unit 60 determines whether or not the fuel cell temperature T3 is lower than a predetermined temperature T3a. The number of counts indicates the number of times of reignition (frequency of reignition) of the combusting portion 26.

In a case where the fuel cell temperature T3 is equal to or greater than the predetermined temperature T3a, the program proceeds to S212. The control unit 60 starts a normal stop operation of the fuel cell system in S212. For example, the control unit 60 stops the supply of the source material, the water and the cathode air. In a case where the aforementioned stop operation is completed or the fuel cell temperature T3 becomes lower than the predetermined temperature T3a, the control unit 60 determines "Yes" in S214 and the program proceeds to S216. In a case where the stop operation is not completed or the fuel cell temperature T3 is greater than the predetermined temperature T3a, the control unit 60 determines "No" in S214 and repeats the operation in S204. Accordingly, the temperature of the fuel cell 24 may promptly decrease to an appropriate temperature for reignition, which may lead to a reduction of a time period for reignition.

On the other hand, in a case where the fuel cell temperature T3 is lower than the predetermined temperature T3a, the control unit 60 determines "Yes" in S210 and the program proceeds to S216. The control unit 60 corrects a source material supply amount and a cathode air supply amount depending on the frequency (the number of times) of reignition for achieving the reignition.

In a case where the number of times of reignition is less than two (i.e., one), the control unit 60 maintains the source material supply amount and the cathode air supply amount at the time of the flame extinction of the combusting portion 26 so as to perform the reignition thereof. Specifically, in S216, the control unit 60 determines whether or not the number of counts is less than a first predetermined number Ca (for example, two). When the number of counts is less than the first predetermined number Ca, the control unit 60 determines "No" in S216 and the program proceeds to S232. In S232 which serves as a reignition portion, the control unit 60 performs the reignition of the combusting portion 26.

Specifically, the control unit 60 performs the process in the flowchart in Fig. 3. In S102, the control unit 60 controls the combusting portion 26 to be ignited. Specifically, the control unit 60 starts sending or supplying the source material and the cathode air. The control unit 60 drives the fuel pump 42c to send out the source material at the predetermined supply flow rate (i.e., the target source material supply amount). The control unit 60 also drives the cathode air blower 44a to send out the cathode air at the predetermined supply flow rate (i.e., the target cathode air supply amount). At the same time as the sending-out of the source material and the cathode air, the control unit 60 starts supplying the electric power to the ignition heaters 26a1 and 26a2. Further, the control unit 60 performs the ignition determination and the flame extinction determination in S104 to S110. In a case where the reignition of the combusting portion 26 is not successful by the first try, the reignition is performed again as the second try.

In a case where the number of times of reignition is two or three, the control unit 60 maintains the source material supply amount at the time of the flame extinction of the combusting portion 26 and decreases the cathode air supply amount at the time of the flame extinction of the combusting portion 26 by an amount (flow rate) corresponding to a half of a tolerance of the flow sensor 44b for achieving the reignition. Specifically, the control unit 60 determines "Yes" in S216 and the program proceeds to S218. In S218, the control unit 60 determines whether or not the number of counts is smaller than a second predetermined number Cb (for example, four) which is specified greater than the first predetermined number Ca. When the number of counts is smaller than the second predetermined number Cb, the control unit 60 determines "No" in S218 and the program proceeds to S220 and later. The control unit 60 performs the reignition of the combusting portion 26 in S220, S222 and S232.

In S220 which serves as an acquisition portion, the control unit 60 acquires the source material supply amount (source material flow rate) and the cathode air supply amount (cathode air flow rate) before the flame extinction of the combusting portion 26. The source material supply amount before the flame extinction of the combusting portion 26 may be obtained from the memory unit 60a as the source material supply amount detected by the flow sensor 42a and stored at the memory unit 60a upon the determination of the flame extinction of the combusting portion 26. The cathode air supply amount before the flame extinction of the combusting portion 26 may be obtained from the memory unit 60a as the cathode air supply amount detected by the flow sensor 44b and stored at the memory unit 60a upon the determination of the flame extinction of the combusting portion 26.

In S222 which serves as a first correction portion, the control unit 60 corrects the cathode air supply amount (oxidant gas flow rate) obtained in S220 by subtracting the amount corresponding to a half of the tolerance of the flow sensor 44b. For example, the control unit 60 subtracts the flow rate corresponding to a half of the tolerance of the flow sensor 44b from a detected flow rate detected by the flow sensor 44b so as to correct the cathode air supply amount for reignition. The control unit 60 may correct the cathode air supply amount for reignition by subtracting the amount corresponding to a half of the tolerance of the flow sensor 44b from the target cathode air supply amount (target supply amount at the time of the flame extinction determination or the ignition). At this time, the source material supply amount is not corrected.

In S232, the control unit 60 performs the reignition of the combusting portion 26. That is, the control unit 60 performs the process in the flowchart illustrated in Fig. 3. The control unit 60 controls the combusting portion 26 to be ignited in S102. Specifically, the control unit 60 drives the cathode air blower 44a to send out the cathode air so that a corrected target cathode air supply amount (which is obtained by subtracting the amount corresponding to a half of the tolerance of the flow sensor 44b from the target cathode air supply amount at the time of the flame extinction determination) is obtained. The control unit 60 also drives the fuel pump 42c to send out the source material so that the target source material supply amount at the time of the flame extinction determination is obtained. At the same time as the sending-out of the cathode air and the source material, the control unit 60 starts the power supply to the ignition heaters 26a1 and 26a2. Further, the control unit 60 performs the ignition determination and the flame extinction determination in S104 to S110.

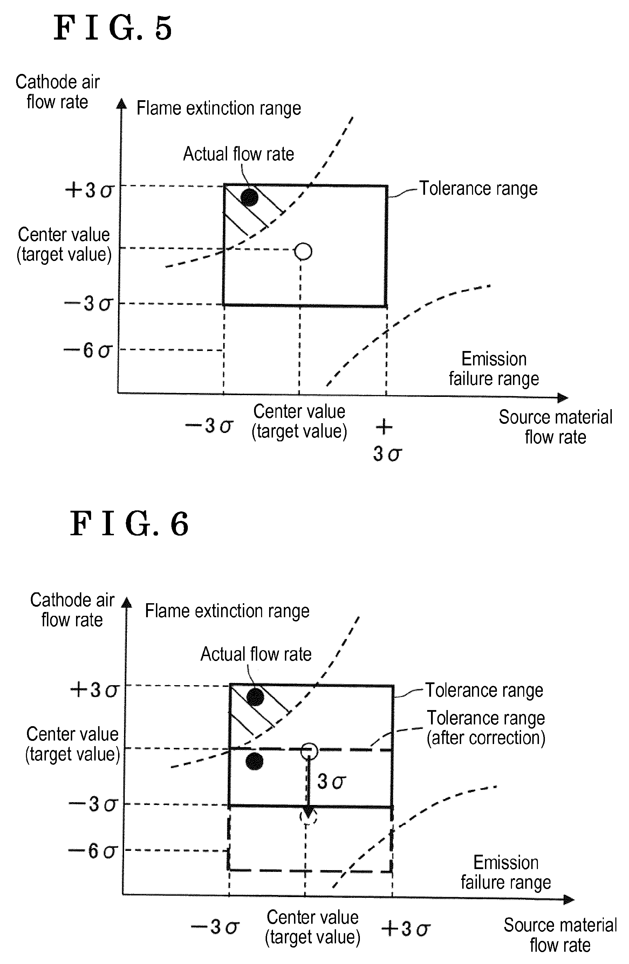

Next, a relation between the source material supply amount (source material flow rate) and the cathode air supply amount (cathode air flow rate) and a relation between a flame extinction range (flame-out range) and an emission failure range will be explained. As illustrated in Fig. 5, the relation or combination between the source material supply amount and the cathode air supply amount is categorized into the combustion state in which the combusting portion 26 is normally combusted and burnt, a flame extinction state in which the flame extinction occurs at the combusting portion 26 or the combusting portion 26 is not ignited, and an emission failure state in which an emission state of the combusting portion 26 is defective. In a case where the cathode air supply amount is relatively large for the source material supply amount, the combusting portion 26 is brought into the flame extinction state (which is illustrated as the flame extinction range at an upper left in Fig. 5). On the other hand, in a case where the cathode air supply amount is relatively small for the source material supply amount, the combusting portion 26 is brought into the emission failure state (which is illustrated as the emission failure range at a lower right in Fig. 5). In a case where the cathode air supply amount is appropriate for the source material supply amount, the combusting portion 26 is brought into the combustion state (which corresponds to a combustion range between the flame extinction range and the emission failure range in Fig. 5).

The flow sensors 42a and 44b include tolerances respectively. A tolerance range generated by the flow sensors 42a and 44b is illustrated in Fig. 5. Each of the tolerances of the flow sensors 42a and 44b is based on a comprehensive variation including individual variations of the flow sensors 42a and 44b and variations in display resolution and hardware circuit, for example. Each of the aforementioned tolerances is specified as a difference between a maximum value and a minimum value of the variation. The tolerance is specified to be 6σ, for example. The symbol σ (sigma) corresponds to a standard deviation of the variation. For example, the tolerance range is specified so that a center value thereof is a half of the tolerance. The center value is a target flow rate of each of the flow sensors 42a and 44b. In a case where the tolerance range for the target flow rate overlaps the flame extinction range and an actual flow rate falls within the aforementioned overlap range, the combusting portion 26 is in the flame extinction state.

In the embodiment, the control unit 60 subtracts the amount corresponding to a half of the tolerance (i.e., 3σ) of the flow sensor 44b from the target cathode air supply amount (i.e., the target supply amount at the time of the flame extinction determination or the ignition) so as to correct the cathode air supply amount for the reignition. The control unit 60 drives the cathode air blower 44a to send out the cathode air so that the corrected target cathode air supply amount is achieved. That is, as illustrated in Fig. 6, the tolerance range entirely moves downward by a half of the tolerance (3σ) of the flow sensor 44b to thereby inhibit the tolerance range from overlapping the flame extinction range. Thus, in a case of the reignition of the combusting portion 26, the flame extinction or non-ignition of the combusting portion 26 is restrained, thereby securely performing the reignition of the combusting portion 26.

In a case where the number of times of reignition is four or five, the control unit 60 increases the source material supply amount at the time of the flame extinction of the combusting portion 26 by an amount (flow rate) corresponding to a predetermined ratio relative to a half of the tolerance of the flow sensor 42a while decreasing the cathode air supply amount at the time of the flame extinction of the combusting portion 26 by the amount (flow rate) corresponding to a half of the tolerance of the flow sensor 44b so as to perform the reignition. Specifically, the control unit 60 determines "Yes" in S216 and S218 and the program proceeds to S224. In S224, the control unit 60 determines whether or not the number of counts is smaller than a third predetermined number Cc (for example, six) which is greater than the second predetermined number Cb. In a case where the number of counts is smaller than the third predetermined number Cc, the control unit 60 determines "No" in S224 and the program proceeds to S226. The control unit 60 performs the reignition of the combusting portion 26 in S226 and S232.

In S226 which serves as a second correction portion, the control unit 60 corrects the source material supply amount (source material flow rate) obtained in S220 by adding the amount corresponding to the predetermined ratio (for example, a half) relative to a half of the tolerance of the flow sensor 42a (which results in a quarter of the tolerance of the flow sensor 42a), in addition to the aforementioned correction by the first correction portion (in S222). For example, the control unit 60 adds the flow rate corresponding to a quarter of the tolerance of the flow sensor 42a to a detection flaw rate detected by the flow sensor 42a to correct the source material supply amount for the reignition. Alternatively, the control unit 60 may add the amount corresponding to the predetermined ratio (for example, a half) relative to a half of the tolerance of the flow sensor 42a (which results in a quarter of the tolerance of the flow sensor 42a) to the target source material supply amount (i.e., the target source material supply amount at the time of the flame extinction determination or the ignition) to correct the source material supply amount for the reignition.

The control unit 60 performs the reignition in S232. Specifically, the control unit 60 drives the fuel pump 42c to send out the source material so that a corrected target source material supply amount (which is obtained by a sum of the target source material supply amount at the time of the flame extinction determination and the amount corresponding to the predetermined ratio relative to a half of the tolerance of the flow sensor 42a) is obtained. In addition, the control unit 60 drives the cathode air blower 44a to send out the cathode air so that the previously corrected target cathode air supply amount (obtained by subtracting the amount corresponding to a half of the tolerance of the flow sensor 44b from the target cathode air supply amount at the time of the flame extinction determination) is obtained. At the same time as the sending of the aforementioned source material and the cathode air, the control unit 60 starts the power supply to the ignition heaters 26a1 and 26a2. Further, the control unit 60 performs the ignition determination and the flame extinction determination in S104 to S110.

Accordingly, the control unit 60 corrects the cathode air supply amount for the reignition of the combusting portion 26 by subtracting the amount corresponding to a half of the tolerance (3σ) of the flow sensor 44b from the target cathode air supply amount (the target supply amount at the time of the flame extinction determination or the ignition). In addition, the control unit 60 corrects the source material supply amount for the reignition of the combusting portion 26 by adding the amount corresponding to the predetermined ratio relative to a half of the tolerance (1.5σ) of the flow sensor 42a to the target source material supply amount (the target supply amount at the time of the flame extinction determination or the ignition). The control unit 60 drives the cathode air blower 44a to send out the cathode air so that the corrected target cathode air supply amount is achieved. The control unit 60 drives the fuel pump 42c to send out the source material so that the corrected target source material supply amount is achieved.

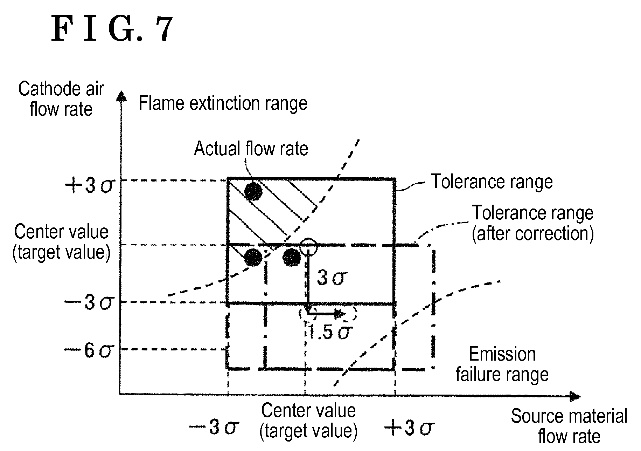

As illustrated in Fig. 7, the tolerance range entirely moves downward by a half of the tolerance (3σ) of the flow sensor 44b and also moves rightward by a quarter of the tolerance (1.5σ) of the flow sensor 42a, which inhibits the tolerance range from overlapping the flame extinction range. Thus, in a case where the combusting portion 26 is reignited, the flame extinction or non-ignition of the combusting portion 26 is restrained. Consequently, the combusting portion 26 may be securely reignited.

In a case where the number of times of reignition is six or more, the control unit 60 increases the source material supply amount at the time of the flame extinction of the combusting portion 26 by the amount corresponding to the predetermined ratio (for example, a half) relative to a half of the tolerance of the flow sensor 42a (which results in a quarter of the tolerance of the flow sensor 42a) while decreasing the cathode air supply amount at the time of the flame extinction of the combusting portion 26 by an amount (flow rate) corresponding to the tolerance of the flow sensor 44b for reigniting the combusting portion 26. Specifically, the control unit 60 determines "Yes" in S224 and the program proceeds to S228. The control unit 60 reignites the combusting portion 26 in S228 and S232.

In S228 which serves as a third correction portion, the control unit 60 corrects the cathode air supply amount (oxidant gas flow rate) obtained in S220 by subtracting an amount (flow rate) corresponding to a half of the tolerance of the flow sensor 44b, in addition to the aforementioned corrections by the first correction portion (S222) and the second correction portion (S226). For example, the control unit 60 further subtracts the flow rate corresponding to a half of the tolerance of the flow sensor 44b from a detection flow rate detected by the flow sensor 44b to correct the cathode air supply amount for the reignition. Alternatively, the control unit 60 may further subtract the amount corresponding to a half of the tolerance of the flow sensor 44b from the target cathode air supply amount (the target supply amount at the time of the flame extinction determination or the ignition).

The control unit 60 performs the reignition of the combusting portion 26 in S232. Specifically, the control unit 60 drives the fuel pump 42c to send out the source material so that the previously corrected target source material supply amount (which is obtained by a sum of the target source material supply amount at the time of the flame extinction determination and the amount corresponding to the predetermined ratio relative to a half of the tolerance of the flow sensor 44b) is obtained. The control unit 60 also drives the cathode air blower 44a to send out the cathode air so that the corrected target cathode air supply amount (which is obtained by subtracting the amount corresponding to the tolerance of the flow sensor 44b from the target cathode air supply amount at the time of the flame extinction determination) is obtained. At the same time as the aforementioned sending-out of the source material and the cathode air, the control unit 60 starts the power supply to the ignition heaters 26a1 and 26a2. Further, the control unit 60 performs the ignition determination and the flame extinction determination in S104 to S110.

Accordingly, the control unit 60 corrects the cathode air supply amount for reigniting the combusting portion 26 by subtracting the amount corresponding to the tolerance (6σ) of the flow sensor 44b from the target cathode air supply amount at the time of the flame extinction determination or the ignition. The control unit 60 also corrects the source material supply amount for reigniting the combusting portion 26 by adding the amount corresponding to the predetermined ratio relative to a half of the tolerance (1.5 σ) of the flow sensor 42a to the target source material supply amount at the time of the flame extinction determination or the ignition. The control unit 60 drives the cathode air blower 44a to send out the cathode air to obtain the corrected target cathode air supply amount. The control unit 60 also drives the fuel pump 42c to send out the source material to obtain the corrected target source material supply amount.

In a case where the number of times or reignition is more than eight, the control unit 60 determines "Yes" in S230 so as to stop the reignition of the combusting portion 26 in S234. The control unit 60 determines whether or not the number of times of reignition is smaller than a fourth predetermined number Cd (for example, eight) which is specified greater than the third predetermined number Cc in S230.

The aforementioned first correction portion (S222), the second correction portion (S226) and the third correction portion (S228) constitute a correction portion. The correction portion corrects at least one of the cathode air supply amount (oxidant gas flow rate) and the source material supply amount (source material flow rate) obtained by the acquisition portion (S220) based on at least one of the tolerances of the flow sensor 42a (source material flow sensor) and the flow sensor 44b (oxidant gas flow sensor).

As mentioned above, the fuel cell system includes the fuel cell 24 performing a power generation by fuel and cathode air (oxidant gas), the reforming portion 23 generating the fuel from a source material and water to supply the fuel to the fuel cell 24, the combusting portion 26 receiving a combustible gas that includes an unused fuel in the fuel not used for the power generation from the fuel cell 24 and combusting the combustible gas by cathode air to send out a combustion gas, the fuel pump 42c (source material supply device) supplying the source material, the cathode air blower 44a (oxidant gas supply device) supplying the cathode air to the combusting portion 26, the flow sensor 42a (source material flow sensor) detecting a supply flow rate of the source material, the flow sensor 44b (oxidant gas flow sensor) detecting a supply flow rate of the cathode air, and the control unit 60 controlling at least the cathode air blower 44a and the fuel pump 42c. The control unit 60 includes the flame extinction determination portion (S108) determining whether or not the flame extinction occurs at the combusting portion 26, the acquisition portion (S220) acquiring the cathode air flow rate serving as a supply flow rate of the cathode air per unit time and a source material flow rate serving as a supply flow rate of the source material per unit time at a time when the flame extinction determination portion (S108) determines that the flame extinction occurs at the combusting portion 26, the correction portion (S222, S226, S228) correcting at least one of the cathode air flow rate and the source material flow rate acquired by the acquisition portion (S220) based on at least one of the tolerances of the flow sensors 44b and 42a, and the reignition portion (S232) controlling the cathode air blower 44a and the fuel pump 42c to supply the cathode air and the source material at a corrected cathode air flow rate and a corrected source material flow rate corrected by the correction portion (S222, S226, S228) to the combusting portion 26 for reigniting the combusting portion 26.

Accordingly, the control unit 60 (the correction portion corresponding to S222, S226 and S228) corrects at least one of the cathode air flow rate and the source material flow rate acquired by the acquisition portion (S220) (i.e., acquired when the flame extinction of the combusting portion 26 is determined) based on at least one of the tolerances of the flow sensors 44b and 42a. Further, the control unit 60 (the reignition portion corresponding to S232) controls the cathode air blower 44a and the fuel pump 42c so as to supply the cathode air and the source material at the corrected cathode air flow rate and the corrected source material flow rate by the correction portion (S222, S226 and S228) for reigniting the combusting portion 26. As a result, in a case where the combusting portion 26 is reignited because the flame extinction occurs at the combusting portion 26 once after the combusting portion 26 is brought to the combustion state or because the combusting portion 26 is not ignited, the source material flow rate and the cathode air flow rate may be changed on a basis of the tolerances of the flow sensors 42a and 44b in view of the source material flow rate and the cathode air flow rate at the time of the flame extinction determination or the ignition so that the combusting portion 26 is shifted from the flame extinction range to the combustion range. Thus, in the fuel cell system of the embodiment, even in a case where a carbon monoxide concentration sensor is omitted, a combustion performance of the combusting portion 26 may be ensured.

In addition, in the embodiment, the control unit 60 (the correction portion) includes the first correction portion (S222) correcting the cathode air flow rate acquired by the acquisition portion (S220) by subtracting a flow rate corresponding to a half of the tolerance of the flow sensor 44b. Initially, only the cathode air flow rate decreases while the source material flow rate is fixed for reigniting the combusting portion 26. Thus, an air fuel ratio is changed in a way that the amount of fuel is relatively large, which may securely ignite the combusting portion 26.

Further, in the embodiment, the control unit 60 (the correction portion) includes the second correction portion (S226) correcting the source material flow rate acquired by the acquisition portion (S220) by adding a flow rate corresponding to a predetermined ratio relative to a half of the tolerance of the flow sensor 42a. Accordingly, in a case where the air fuel ratio is in such a state that the amount of fuel is relatively small even after the cathode air flow rate decreases, only the source material flow rate increases while the cathode air flow rate is fixed so as to perform the reignition of the combusting portion 26. Thus, the air fuel ratio is changed in a way that the amount of fuel is relatively large, which may securely ignite the combusting portion 26.

Furthermore, in the embodiment, the control unit 60 (the correction portion) includes the third correction portion (S228) correcting the cathode air flow rate acquired by the acquisition portion (S220) by further subtracting a flow rate corresponding to a half of the tolerance of the flow sensor (44b). Accordingly, while the source material flow rate is fixed, only the cathode air flow rate further decreases so as to perform the reignition of the combusting portion 26. Thus, the air fuel ratio is changed in a way that the amount of fuel is relatively large, which may securely ignite the combusting portion 26.

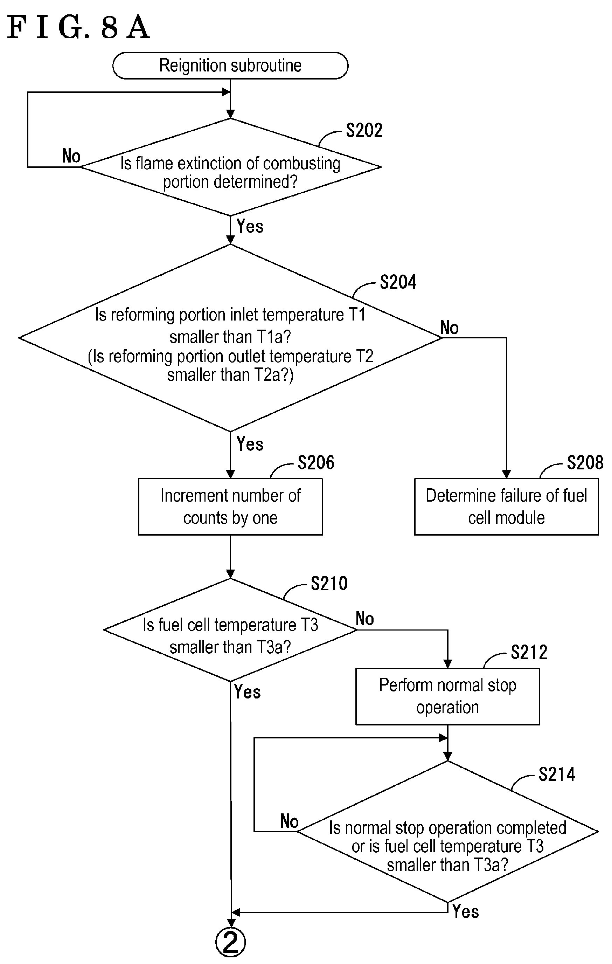

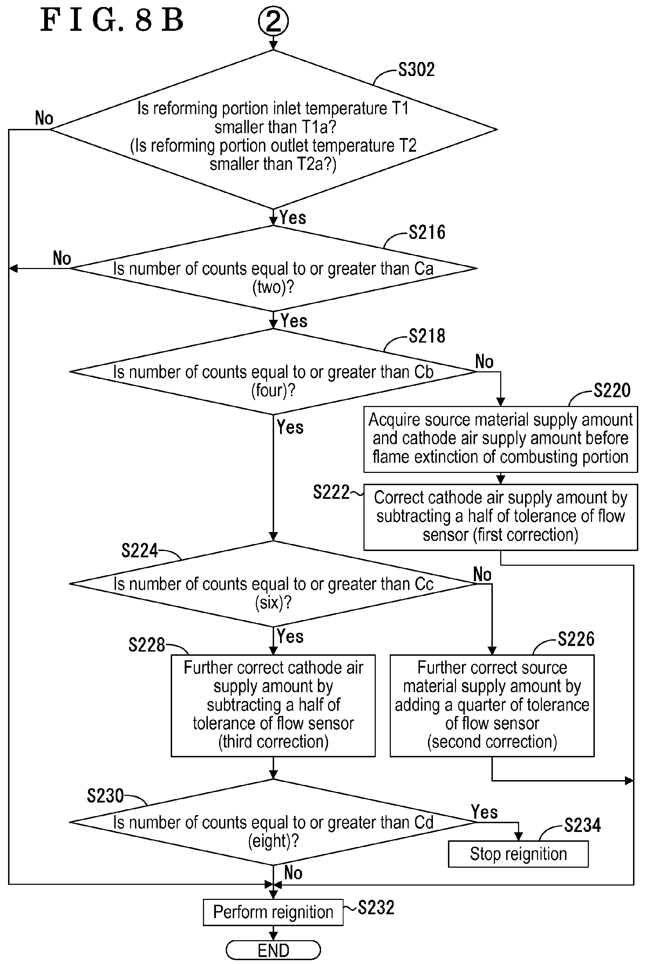

A first control modified example will be explained with reference to Figs. 8A and 8B. The first control modified example is different from the aforementioned embodiment in that S302 is added between each of S210 and S214, and S216. The substantially same configurations in the first control modified example as the configurations of the aforementioned embodiment bear the same reference numerals and an explanation thereof will be omitted.

In S302, the control unit 60 determines that the fuel cell module 20 is in a state where the flame extinction is likely to occur at the combusting portion 26 in a case where the temperature of the reforming portion 23 is lower than a predetermined temperature. In this case, the temperature of the reforming portion 23 corresponds to the reforming portion inlet temperature T1 and the predetermined temperature corresponds to the predetermined temperature T1a, for example. Alternatively, the temperature of the reforming portion 23 corresponds to the reforming portion outlet temperature T2 and the predetermined temperature corresponds to the predetermined temperature T2a, for example. By the detection of the temperature of the reforming portion 23, it is securely detectable that the flame extinction of the combusting portion 26 is likely to occur.

In a case where the temperature of the reforming portion 23 is equal to or greater than the predetermined temperature, the control unit 60 determines "No" in S302, i.e., determines that the combusting portion 26 can be reignited with the source material flow rate and the cathode air flow rate at the time of the flame extinction determination. Consequently, the control unit 60 performs the reignition of the combusting portion 26 without the corrections of the source material flow rate and the cathode air flow rate in S232.

On the other hand, the control unit 60 determines "Yes" in S302 in a case where the fuel cell module 20 that houses the fuel cell 24, the reforming portion 23 and the combusting portion 26 is in the state where the flame extinction is likely to occur at the combusting portion 26. The control unit 60 corrects the cathode air flow rate and the source material flow rate acquired by the acquisition portion (S220) based on the tolerances of the flow sensors 42a and 44b (in S222, S226, S228) to thereby control the cathode air blower 44a and the fuel pump 42c. As a result, the cathode air and the fuel at the corrected cathode air flow rate and the corrected source material flow rate by the correction portion (S222, S226, S228) are supplied to the combusting portion 26 so as to perform the reignition of the combusting portion 26 in S232. Accordingly, even in a state where the flame extinction of the combusting portion 26 is likely to occur, the combusting portion 26 may be securely reignited. The state where the flame extinction of the combusting portion 26 is likely to occur corresponds to a state where the source material includes a relatively high water content (for example, propane gas), a state where the carbon number in the source material is three or greater, and the like.

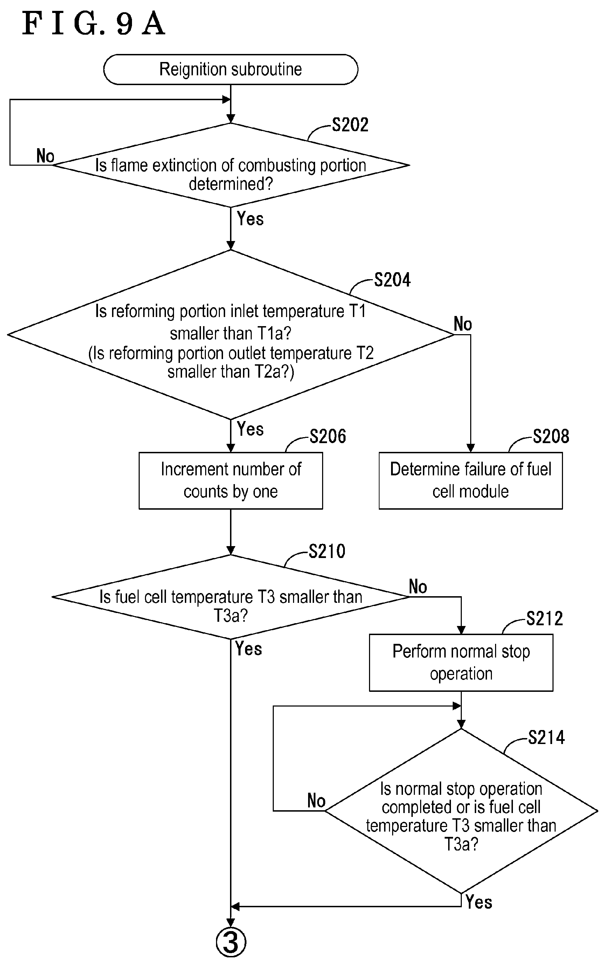

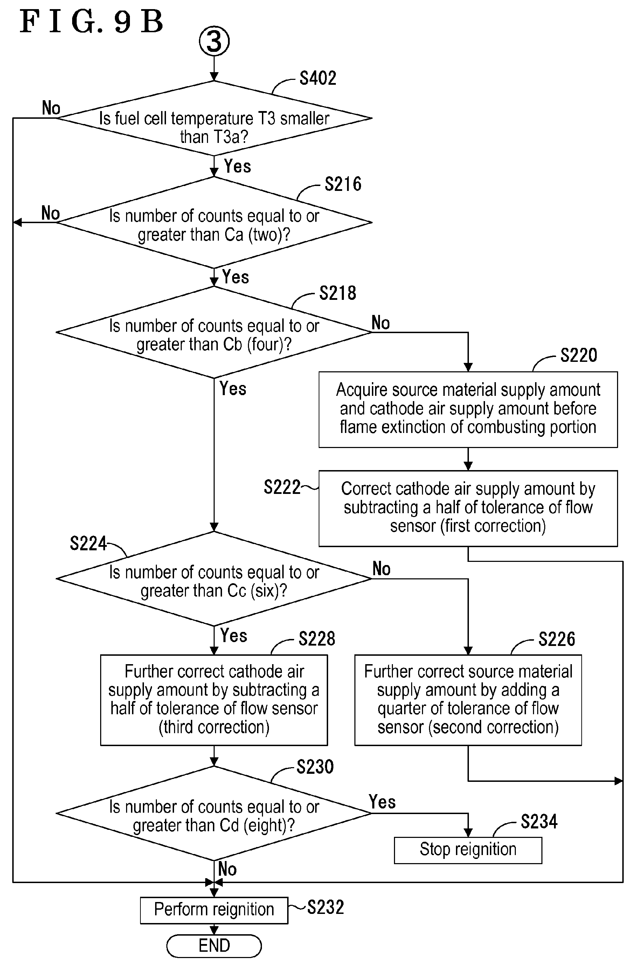

A second control modified example will be explained with reference to Figs. 9A and 9B. The second control modified example differs from the first control modified example in that S402 is performed instead of S302 in the first control modified example. The substantially same configurations in the second control modified example as the configurations of the aforementioned embodiment bear the same reference numerals and an explanation thereof will be omitted.

In S402, the control unit 60 determines that the fuel cell module 20 is in the state where the flame extinction is likely to occur at the combusting portion 26 in a case where the fuel cell temperature T3 of the fuel cell 24 is lower than the predetermined temperature T3a. By the detection of the temperature of the fuel cell 24, it is securely detectable that the flame extinction of the combusting portion 26 is likely to occur.

In a case where the fuel cell temperature T3 of the fuel cell 24 is equal to or greater than the predetermined temperature T3a, the control unit 60 determines "No" in S402, i.e., determines that the combusting portion 26 can be reignited with the source material flow rate and the cathode air flow rate at the time of the flame extinction determination. Consequently, the control unit 60 performs the reignition of the combusting portion 26 without the corrections of the source material flow rate and the cathode air flow rate in S232. On the other hand, the control unit 60 determines "Yes" in S402 in a case where the fuel cell module 20 that houses the fuel cell 24, the reforming portion 23 and the combusting portion 26 is in the state where the flame extinction is likely to occur at the combusting portion 26. The control unit 60 corrects the cathode air flow rate and the source material flow rate acquired by the acquisition portion (S220) based on the tolerances of the flow sensors 42a and 44b (in S222, S226, S228) to thereby control the cathode air blower 44a and the fuel pump 42c. As a result, the cathode air and the fuel at the corrected cathode air flow rate and the corrected source material flow rate by the correction portion (S222, S226, S228) are supplied to the combusting portion 26 so as to perform the reignition of the combusting portion 26 in S232. Accordingly, even in a state where the flame extinction of the combusting portion 26 is likely to occur, the combusting portion 26 may be securely reignited.

A fuel cell system includes a fuel cell (24), a reforming portion (23), a combusting portion (26), a source material supply device (42c), an oxidant gas supply device (44a), a source material flow sensor (42a), an oxidant gas flow sensor (44b), and a control unit (60) including a flame extinction determination portion (S108), an acquisition portion (S220) acquiring an oxidant gas flow rate and a source material flow rate at a time when the flame extinction determination portion determines that the flame extinction occurs, a correction portion (S222, S226, S228) correcting the oxidant gas flow rate and the source material flow rate based on tolerances of the source material flow sensor and the oxidant gas flow sensor, and a reignition portion (S232) controlling to supply the oxidant gas and the source material at a corrected oxidant gas flow rate and a corrected source material flow rate to the combusting portion.

## Claims

1. A fuel cell system comprising:
a fuel cell (**24**) performing a power generation by a fuel and an oxidant gas;
a reforming portion (**23**) generating the fuel from a source material and water to supply the fuel to the fuel cell (**24**);
a combusting portion (**26**) receiving a combustible gas that includes an unused fuel in the fuel not used for the power generation from the fuel cell (**24**) and combusting the combustible gas by an oxidant gas to send out a combustion gas;
a source material supply device (**42c**) supplying the source material;
an oxidant gas supply device (**44a**) supplying the oxidant gas to the combusting portion (**26**);
a source material flow sensor (**42a**) detecting a supply flow rate of the source material;
an oxidant gas flow sensor (**44b**) detecting a supply flow rate of the oxidant gas; and
a control unit (**60**) controlling at least the oxidant gas supply device (**44a**) and the source material supply device (**42c**), the control unit (**60**) including a flame extinction determination portion (**S108**) determining whether or not a flame extinction occurs at the combusting portion (**26**), an acquisition portion (**S220**) acquiring an oxidant gas flow rate serving as a supply flow rate of the oxidant gas per unit time and a source material flow rate serving as a supply flow rate of the source material per unit time at a time when the flame extinction determination portion determines that the flame extinction occurs at the combusting portion (**26**), a correction portion (**S222**, **S226**, **S228**) correcting at least one of the oxidant gas flow rate and the source material flow rate acquired by the acquisition portion (**S220**) based on at least one of tolerances of the source material flow sensor (**42a**) and the oxidant gas flow sensor (**44b**), and a reignition portion (**S232**) controlling the oxidant gas supply device (**44a**) and the source material supply device (**42c**) to supply the oxidant gas and the source material at a corrected oxidant gas flow rate and a corrected source material flow rate corrected by the correction portion (**S222**, **S226**, **S228**) to the combusting portion (**26**) for reigniting the combusting portion (**26**),
**characterized in that**
the correction portion includes a first correction portion (**S222**) correcting the oxidant gas flow rate acquired by the acquisition portion (**S220**) by subtracting a flow rate corresponding to a half of the tolerance of the oxidant gas flow sensor (**44b**).

2. The fuel cell system according to claim 1, wherein the control unit (**60**) determines that the flame extinction occurs at the combusting portion (**26**) in a case where a temperature of the combusting portion (**26**) is lower than a predetermined temperature.

3. The fuel cell system according to claim 1, wherein the correction portion includes a second correction portion (**S226**) correcting the source material flow rate acquired by the acquisition portion (**S220**) by adding a flow rate corresponding to a predetermined ratio relative to a half of the tolerance of the source material flow sensor (**42a**).

4. The fuel cell system according to claim 3, wherein the correction portion includes a third correction portion (**S228**) correcting the oxidant gas flow rate acquired by the acquisition portion (**S220**) by further subtracting a flow rate corresponding to a half of the tolerance of the oxidant gas flow sensor (**44b**).

5. The fuel cell system according to any one of claims 1 through 4, further comprising a fuel cell module (**20**) that houses the fuel cell (**24**), the reforming portion (**23**) and the combusting portion (**26**), wherein the correction portion (**S222**, **S226**, **S228**) corrects the oxidant gas flow rate and the source material flow rate acquired by the acquisition portion (**S220**) based on the tolerances of the oxidant gas flow sensor (**44b**) and the source material flow sensor (**42a**) and the reignition portion (**S232**) controls the oxidant gas supply device (**44a**) and the source material supply device (**42c**) to supply the oxidant gas and the source material at a corrected oxidant gas flow rate and a corrected source material flow rate corrected by the correction portion (**S222**, **S226**, **S228**) to the combusting portion (**26**) for reigniting the combusting portion (**26**) in a case where the fuel cell module (**20**) is in a state where the flame extinction is likely to occur at the combusting portion (**26**).

6. The fuel cell system according to claim 5, wherein the control unit (**60**) determines that the fuel cell module (**20**) is in the state where the flame extinction is likely to occur at the combusting portion (**26**) in a case where a temperature (**T3**) of the fuel cell (**24**) is lower than a predetermined temperature (**T3a**).

7. The fuel cell system according to claim 6, wherein the control unit (**60**) determines that the fuel cell module (**20**) is in the state where the flame extinction is likely to occur at the combusting portion (**26**) in a case where a temperature (**T1**, **T2**) of the reforming portion (**23**) is lower than a predetermined temperature (**T1a**, **T2a**).

## Patentansprüche

1. Brennstoffzellensystem, mit:
einer Brennstoffzelle (**24**), die eine Energieerzeugung durch einen Brennstoff und ein Oxidationsgas durchführt;
einem Reformierungsabschnitt (**23**), der den Brennstoff aus einem Ausgangsmaterial und Wasser erzeugt, um den Brennstoff zu der Brennstoffzelle (**24**) zuzuführen;
einem Verbrennungsabschnitt (**26**), der ein brennbares Gas, das nicht verwendeten Brennstoff in dem Brennstoff, der nicht für die Energieerzeugung verwendet wurde, enthält, von der Brennstoffzelle (**24**) empfängt und das brennbare Gas mittels eines Oxidationsgases verbrennt, um ein Verbrennungsgas auszubringen;
einer Ausgangsmaterialzufuhrvorrichtung (**42c**), das das Ausgangsmaterial zuführt;
einer Oxidationsgaszufuhrvorrichtung (**44a**), die das Oxidationsgas dem Verbrennungsabschnitt (**26**) zuführt;
einem Ausgangsmaterialdurchsatzsensor (**42a**), der eine Zufuhrdurchsatzrate des Ausgangsmaterials erfasst;
einem Oxidationsgasdurchsatzsensor (**44b**), der eine Zufuhrdurchsatzrate des Oxidationsgases erfasst; und
einer Steuereinheit (**60**), die zumindest die Oxidationsgaszufuhrvorrichtung (**44a**) und die Ausgangsmaterialzufuhrvorrichtung (**42c**) steuert, wobei die Steuereinheit (**60**) einen Flammenerlöschenbestimmungsabschnitt (**S108**), der bestimmt, ob ein Auslöschen einer Flamme am Verbrennungsabschnitt (**26**) auftritt oder nicht, einen Bezugsabschnitt (**S220**), der eine Oxidationsgasdurchsatzrate, die als eine Zufuhrdurchsatzrate des Oxidationsgases pro Zeiteinheit dient, und eine Ausgangsmaterialdurchsatzrate, die als eine Zufuhrdurchsatzrate des Ausgangsmaterials pro Zeiteinheit dient, zu einem Zeitpunkt bezieht, an dem der Flammenerlöschenbestimmungsabschnitt bestimmt, dass ein Auslöschen der Flamme am Verbrennungsabschnitt (**26**) auftritt, einen Korrekturabschnitt (**S222**, **S226**, **S228**), der die durch den Bezugsabschnitt (**S220**) bezogene Oxidationsgasdurchsatzrate und/oder Ausgangsmaterialdurchsatzrate basierend auf Toleranzen des Ausgangsmaterialdurchsatzsensor (**42a**) und/oder des Oxidationsgasdurchsatzsensor (**44b**) korrigiert, und einen Wiederentzündungsabschnitt (**S232**), der die Oxidationsgaszufuhrvorrichtung (**44a**) und die Ausgangsmaterialzufuhrvorrichtung (**42c**) steuert, um das Oxidationsgas und das Ausgangsmaterial mit einer korrigierten Oxidationsgasdurchsatzrate und einer korrigierten Ausgangsmaterialdurchsatzrate, die durch den Korrekturabschnitt (**S222**, **S226**, **S228**) korrigiert wurden, dem Verbrennungsabschnitt (**26**) zum Wiederentzünden des Verbrennungsabschnitts (**26**) zuzuführen,
**dadurch gekennzeichnet, dass**
der Korrekturabschnitt einen ersten Korrekturabschnitt (**S222**), der die durch den Bezugsabschnitt (**S220**) bezogene Oxidationsgasdurchsatzrate durch Subtrahieren einer Durchsatzrate entsprechend einer Hälfte der Toleranz des Oxidationsgasdurchsatzsensors (**44b**) korrigiert.

2. Brennstoffzellensystem gemäß Anspruch 1, wobei die Steuereinheit (**60**) bestimmt, dass das Auslöschen der Flamme am Verbrennungsabschnitt (**26**) auftritt, in einem Fall, in dem eine Temperatur des Verbrennungsabschnitts (**26**) niedriger ist als eine vorbestimmte Temperatur.

3. Brennstoffzellensystem gemäß Anspruch 1, wobei der Korrekturabschnitt einen zweiten Korrekturabschnitt (**S226**) umfasst, der die durch den Bezugsabschnitt (**S220**) bezogene Ausgangsmaterialdurchsatzrate durch Hinzufügen einer Durchsatzrate entsprechend eines vorbestimmten Verhältnisses bezüglich einer Hälfte der Toleranz des Ausgangsmaterialdurchsatzsensors (**42a**) korrigiert.

4. Brennstoffzellensystem gemäß Anspruch 3, wobei der Korrekturabschnitt einen dritten Korrekturabschnitt (**S228**) umfasst, der die durch den Bezugsabschnitt (**S220**) bezogene Oxidationsgasdurchsatzrate durch weiteres Subtrahieren einer Durchsatzrate entsprechend einer Hälfte der Toleranz des Oxidationsgasdurchsatzsensors (**44b**) korrigiert.

5. Brennstoffzellensystem gemäß einem der Ansprüche 1 bis 4, weiterhin mit einem Brennstoffzellenmodul (**20**), das die Brennstoffzelle (**24**), den Reformierungsabschnitt (**23**) und den Verbrennungsabschnitt (**26**) beherbergt, wobei der Korrekturabschnitt (**S222**, **S226**, **S228**) die durch den Bezugsabschnitt (**S220**) bezogene Oxidationsgasdurchsatzrate und Ausgangsmaterialdurchsatzrate basierend auf Toleranzen des Oxidationsgasdurchsatzsensors (**44b**) und des Ausgangsmaterialdurchsatzsensors (**42a**) korrigiert, und der Wiederentzündungsabschnitt (**S232**) die Oxidationsgaszufuhrvorrichtung (**44a**) und die Ausgangsmaterialzufuhrvorrichtung (**42c**) steuert, um das Oxidationsgas und das Ausgangsmaterial mit einer korrigierten Oxidationsgasdurchsatzrate und einer korrigierten Ausgangsmaterialdurchsatzrate, die durch den Korrekturabschnitt (**S222**, **S226**, **S228**) korrigiert wurden, dem Verbrennungsabschnitt (**26**) zum Wiederentzünden des Verbrennungsabschnitts (**26**) zuzuführen, in einem Fall, in dem sich das Brennstoffzellenmodul (**20**) in einem Zustand befindet, in dem es wahrscheinlich ist , dass das Auslöschen der Flamme am Verbrennungsabschnitt (**26**) auftritt.

6. Brennstoffzellensystem gemäß Anspruch 5, wobei die Steuereinheit (**60**) bestimmt, dass sich das Brennstoffzellenmodul (**20**) in dem Zustand befindet, in dem es wahrscheinlich ist , dass das Auslöschen der Flamme am Verbrennungsabschnitt (**26**) auftritt, in einem Fall, in dem eine Temperatur (**T3**) der Brennstoffzelle (**24**) niedriger ist als eine vorbestimmte Temperatur (**T3a**).

7. Brennstoffzellensystem gemäß Anspruch 6, wobei die Steuereinheit (**60**) bestimmt, dass sich das Brennstoffzellenmodul (**20**) in dem Zustand befindet, in dem es wahrscheinlich ist , dass das Auslöschen der Flamme am Verbrennungsabschnitt (**26**) auftritt, in einem Fall, in dem eine Temperatur (**T1**, **T2**) des Reformierungsabschnitts (**23**) niedriger ist als eine vorbestimmte Temperatur (**T1a**, **T2a**).

## Revendications

1. Système de pile à combustible comprenant :
une pile à combustible (24) réalisant une production de courant par un combustible et un gaz oxydant ;
une portion de réformage (23) produisant le combustible à partir d'un matériau source et d'eau pour introduire le combustible dans la pile à combustible (24) ;
une portion de combustion (26) recevant un gaz combustible qui comprend un combustible inutilisé dans le combustible non utilisé pour la production de courant à partir de la pile à combustible (24) et réalisant la combustion du gaz combustible par un gaz oxydant pour libérer un gaz de combustion ;
un dispositif d'introduction de matériau source (42c) introduisant le matériau source ;
un dispositif d'introduction de gaz oxydant (44a) introduisant le gaz oxydant dans la portion de combustion (26) ;
un capteur d'écoulement de matériau source (42a) détectant un débit d'introduction du matériau source ;
un capteur d'écoulement de gaz oxydant (44b) détectant un débit d'introduction du gaz oxydant ; et
une unité de contrôle (60) contrôlant au moins le dispositif d'introduction de gaz oxydant (44a) et le dispositif d'introduction de matériau source (42c), l'unité de contrôle (60) comprenant une portion de détermination d'extinction de flamme (S108) déterminant si une extinction de flamme a lieu ou non sur la portion de combustion (26), une portion d'acquisition (S220) acquérant un débit de gaz oxydant servant de débit d'introduction du gaz oxydant par unité de temps et un débit de matériau source servant de débit d'introduction du matériau source par unité de temps au moment où la portion de détermination d'extinction de flamme détermine si l'extinction de flamme a lieu dans la portion de combustion (26), une portion de correction (S222, S226, S228) corrigeant au moins un du débit de gaz oxydant et du débit de matériau source acquis par la portion d'acquisition (S220) sur la base d'au moins une des tolérances du capteur d'écoulement de matériau source (42a) et du capteur d'écoulement de gaz oxydant (44b), et une portion de ré-allumage (S232) contrôlant le dispositif d'introduction de gaz oxydant (44a) et le dispositif d'introduction de matériau source (42c) pour introduire le gaz oxydant et le matériau source à un débit de gaz oxydant corrigé et un débit de matériau source corrigé corrigés par la portion de correction (S222, S226, S228) dans la portion de combustion (26) pour ré-allumer la portion de combustion (26),
**caractérisé en ce que**
la portion de correction comprend une première portion de correction (S222) corrigeant le débit de gaz oxydant acquis par la portion d'acquisition (S220) en soustrayant un débit correspondant à une moitié de la tolérance du capteur de débit de gaz oxydant (44b).

2. Système de pile à combustible selon la revendication 1, dans lequel l'unité de contrôle (60) détermine si l'extinction de flamme a lieu dans la portion de combustion (26) dans un cas où une température de la portion de combustion (26) est inférieure à une température prédéterminée.

3. Système de pile à combustible selon la revendication 1, dans lequel la portion de correction comprend une seconde portion de correction (S226) corrigeant le débit de matériau source acquis par la portion d'acquisition (S220) par addition d'un débit correspondant à un rapport prédéterminé relatif à une moitié de la tolérance du capteur d'écoulement de matériau source (42a).

4. Système de pile à combustible selon la revendication 3, dans lequel la portion de correction comprend une troisième portion de correction (S228) corrigeant le débit de gaz oxydant acquis par la portion d'acquisition (S220) en soustrayant encore un débit correspondant à une moitié de la tolérance du capteur d'écoulement de gaz oxydant (44b).

5. Système de pile à combustible selon l'une quelconque des revendications 1 à 4, comprenant de plus un module de pile à combustible (20) qui loge la pile à combustible (24), la portion de réformage (23) et la portion de combustion (26), dans lequel la portion de correction (S222, S226, S228) corrige le débit de gaz oxydant et le débit de matériau source acquis par la portion d'acquisition (S220) sur la base des tolérances du capteur d'écoulement de gaz oxydant (44b) et du capteur d'écoulement de matériau source (42a) et la portion de ré-allumage (S232) contrôle le dispositif d'introduction de gaz oxydant (44a) et le dispositif d'introduction de matériau source (42c) pour introduire le gaz oxydant et le matériau source à un débit de gaz oxydant corrigé et un débit de matériau source corrigé corrigés par la portion de correction (S222, S226, S228) dans la portion de combustion (26) pour ré-allumer la portion de combustion (26) dans un cas où le module de pile à combustible (20) se trouve dans un état dans lequel l'extinction de flamme a tendance à avoir lieu dans la portion de combustion (26).

6. Système de pile à combustible selon la revendication 5, dans lequel l'unité de contrôle (60) détermine si le module de pile à combustible (20) se trouve dans l'état dans lequel l'extinction de flamme a tendance à avoir lieu dans la portion de combustion (26) dans un cas où une température (T3) de la pile à combustible (24) est inférieure à une température prédéterminée (T3a).

7. Système de pile à combustible selon la revendication 6, dans lequel l'unité de contrôle (60) détermine si le module de pile à combustible (20) se trouve dans l'état dans lequel l'extinction de flamme a tendance à avoir lieu dans la portion de combustion (26) dans un cas où une température (T1, T2) de la portion de réformage (23) est inférieure à une température prédéterminée (T1a, T2a).
